# EUROPEAN PATENT APPLICATION

(11) **EP 3 855 324 A1**
(43) Date of publication of application: **28.07.2021**
(21) Application number: 19863131.9
(22) Date of filing: 10.01.2019
(51) Int. Cl.: G06F 16/9535

(54) **ASSOCIATIVE RECOMMENDATION METHOD AND APPARATUS, COMPUTER DEVICE, AND STORAGE MEDIUM**

(30) Priority: 18.09.2018 CN 201811088983
(71) Applicant: One Connect Smart Technology Co., Ltd. (Shenzhen), Shenzhen, Guangdong 518052 (CN)
(72) Inventor: JIANG, Lin, Shenzhen, Guangdong 518052 (CN); CAI, Jian, Shenzhen, Guangdong 518052 (CN); ZHAO, Yunsong, Shenzhen, Guangdong 518052 (CN)
(74) Representative: de Arpe Fernandez, Manuel
(86) International application number: PCT/CN2019/071180
(87) International publication number: WO 2020/057022

(57) **Abstract**

An association recommendation method based on data resources comprises: receiving a search request sent by a terminal, and acquiring a user search behavior log according to the search request, wherein the search request carries user identification; and the user identification corresponds to user permission. Corresponding search keywords are extracted from the search behavior log according to the user identification, and the search keywords are classified according to the user permission and the preset search keyword category. Association data corresponding to the search keyword category is acquired from an association recommendation set according to the correspondence between the preset search keyword category and the association recommendation set, and the association data is sent to the terminal.

## Description

### CROSS REFERENCE TO RELATED APPLICATION

This application claims the priority of China Patent Application No. 2018110889833, filed September 18, 2018 and entitled "Association Recommendation Method and Device, Computer Equipment and Storage Medium", which is incorporated by reference in its entirety.

### TECHNICAL FIELD

This application relates to an association recommendation method and device, computer equipment and a storage medium.

### BACKGROUND

With the continuous development of computer science and technology, there has been a method for acquiring information through using the network. The method can acquire a large amount of information on the network and provide a faster information acquisition speed. What followed is that more and more users search and acquire all kinds of information through network search.

Candidate words can be automatically recommended below the search box through the traditional search technology when users enter a query term through a search engine, and other queries that are semantically related to the input query of the users are recommended to the users.

However, the inventor realizes that the candidate words can be automatically recommended below the search box through the traditional search technology when the users enter some query term through the search engine, and other queries that are semantically related to the input query of the users are recommended to the users. However, based on the search popularity of each keyword and personal search history, the search association function of various traditional search engines cannot push service information that meets their own needs to the users in conjunction with the user search intent and cannot be associated with user permissions and association groups; and the recommendation relevance is poor.

### SUMMARY

According to various embodiments disclosed in the present application, an association recommendation method and device, computer equipment and a storage medium are provided.

An association recommendation method comprises:
receiving a search request sent by a terminal, and acquiring a search behavior log of the user according to the search request; the search request carries a user identification, and the user identification corresponds to a user permission;
extracting corresponding search keywords from the search behavior log according to the user identification;
classifying the search keywords according to the user permission and a preset search keyword category; and
acquiring association data corresponding to the search keyword category from an association recommendation set according to the correspondence between the preset search keyword category and the association recommendation set, and sending the association data to the terminal.

An association recommendation device comprises:
a search log acquiring module, which is used to receive the search request sent by the terminal and acquire the search behavior log of the user according to the search request; the search request carries the user identification, and the user identification corresponds to the user permission;
a search keyword extraction module, which is used to extract the corresponding search keywords from the search behavior log according to the user identification;
a classification module, which is used to classify the search keywords according to the user permission and the preset search keyword category; and
an association data acquiring module, which is used to acquire the association data corresponding to the search keyword category from the association recommendation set according to the correspondence between the preset search keyword category and the association recommendation set, and send the association data to the terminal.

A computer equipment comprises a memory and one or a plurality of processors; computer readable instructions are stored in the memory, and when the computer readable instructions are executed by the processor, one or the plurality of processors execute the following steps:
receiving a search request sent by a terminal, and acquiring a search behavior log of the user according to the search request; the search request carries a user identification, and the user identification corresponds to a user permission;
extracting corresponding search keywords from the search behavior log according to the user identification;
classifying the search keywords according to the user permission and a preset search keyword category; and
acquiring association data corresponding to the search keyword category from an association recommendation set according to the correspondence between the preset search keyword category and the association recommendation set, and sending the association data to the terminal.

One or a plurality of non-volatile computer readable storage media for storing the computer readable instructions; when the computer readable instructions are executed by one or the plurality of processors, one or the plurality of processors perform the following steps:
receiving a search request sent by a terminal, and acquiring a search behavior log of the user according to the search request; the search request carries a user identification, and the user identification corresponds to a user permission;
extracting corresponding search keywords from the search behavior log according to the user identification;
classifying the search keywords according to the user permission and a preset search keyword category; and
acquiring association data corresponding to the search keyword category from an association recommendation set according to the correspondence between the preset search keyword category and the association recommendation set, and sending the association data to the terminal.

The details of one or a plurality of embodiments of the application are raised in the following accompanying drawings and description. Other features and advantages of this application will become apparent from the description, accompanying drawings and claims.

### BRIEF DESCRIPTION OF THE ACCOMPANYING DRAWINGS

In order to explain the technical schemes in the embodiments of the application more clearly, the accompanying drawings used in the embodiments are briefly introduced. Obviously, the accompanying drawings described below are only some embodiments of the application. Those skilled in the art can obtain other accompanying drawings according to these accompanying drawings without creative work.
Fig. 1 is an application scene diagram of an association recommendation method according to one or a plurality of embodiments.
Fig. 2 is a flow schematic diagram of an association recommendation method according to one or the plurality of embodiments.
Fig. 3 is a flow schematic diagram of acquiring association data corresponding to a search keyword category according to one or the plurality of embodiments.
Fig. 4 is a block diagram of an association recommendation device according to one or the plurality of embodiments.
Fig. 5 is a block diagram of computer equipment according to one or the plurality of embodiments.

### DETAILED DESCRIPTION OF ILLUSTRATED EMBODIMENTS

In order to make the technical scheme and advantages of the present application clearer, the present application is explained in detail in conjunction with the accompanying drawings and the embodiments. It should be understood that the specific embodiments described herein are only used to explain the present application, but not to limit the present application.

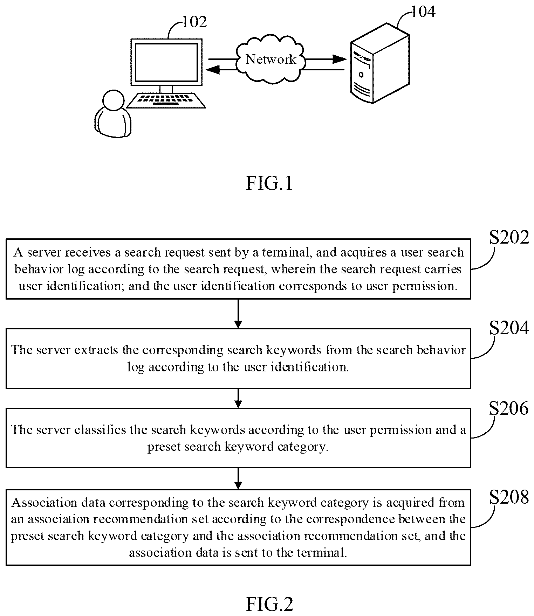

The association recommendation method provided in this application can be applied to the application environment as shown in Fig. 1. The terminal 102 communicates with the server 104 through the network. The server 104 receives the search request sent by the terminal 102, and acquires the user search behavior log according to the search request. The search request carries the user identification, and the user identification corresponds to the user permission. The server 104 extracts corresponding search keywords from the search behavior log according to the user identification, and classifies the search keywords according to the user permission and the preset search keyword category. The server 104 acquires the association data corresponding to the search keyword category from the association recommendation set according to the correspondence between the preset search keyword category and the association recommendation set, and sends the association data to the terminal 102. The terminal 102 may be, but is not limited to, various personal computers, notebook computers, smart phones, and tablet computers. The server 104 can be implemented by an independent server or a server cluster composed of a plurality of servers.

In one of the embodiments, as shown in Fig. 2, an association recommendation method is provided. Taking the method applied to the server in Fig. 1 as an example for description, the method comprises the following steps:
S202: the server receives the search request sent by the terminal, and acquires the user search behavior log according to the search request. The search request carries the user identification, and the user identification corresponds to the user permission.

Specifically, the search request carries the user identification, which is used to indicate that the corresponding user performs a search operation at the terminal and a corresponding search phrase is entered. The server acquires the user search behavior log from the database according to the search phrase entered by the user. The user identification corresponds to the user permission, and the server can acquire the user permission possessed by the corresponding user according to the user identification carried in the search request.

The search phrase can be a single word or a phrase or sentence composed of a plurality of words, and can be Chinese characters or pinyin. For example, the search phrase can be "Chinese character of Shenzhen", "English word of Shenzhen", and "Shanghai Population Education Distribution". The user search behavior log comprises user historical search operations and search results corresponding to the historical operations. At the same time, since the user search behavior comprises an input search behavior and a click search behavior, the corresponding search results comprises input search results and click search results. The corresponding user search behavior log can be generated according to the user historical input search behavior and the corresponding historical input search results as well as the user historical click search input and the corresponding historical click search results.

Further, the server receives the search request of the terminal, acquires the user identification carried in the search request, and acquires the user permission corresponding to the user identification according to the correspondence between the user identification and the user permission. According to the search phrase entered by the user, the historical search operation corresponding to the user identification and the search result corresponding to the historical search operation are acquired from the database. At the same time, the historical search operation and the corresponding search results of different users with the same user permission can be acquired according to the user permission of the user.

Taking the input search performed by the user at the terminal as an example, the search phrase entered by the user is "How is the Education Distribution of Male Borrowers in Shanghai". The server receives the search request sent by the terminal and acquires the historical search operation corresponding to the user identification in the database, including "Shanghai", "Male Borrower", "Education Distribution", "Male Education Distribution in Shanghai" and "Borrower Education Distribution", etc. and a plurality of historical search operations. The server acquires the search results corresponding to the historical search operations from the database. According to the plurality of historical operations and corresponding search results, the user search behavior log corresponding to the "how is the education distribution of male borrowers in Shanghai" entered by the user is generated.

S204: the server extracts the corresponding search keywords from the search behavior log according to the user identification.

Specifically, the server acquires the corresponding scene according to the user identification, acquires the historical search input corresponding to the search phrase in the corresponding scene from the database according to the search phrase entered by the user, and acquires the search results corresponding to the historical search input from the search behavior log. The historical search data in the corresponding scene can be produced according to the historical search input corresponding to the search phrase entered by the user in the scene and the search result corresponding to the historical search input. The server extracts search keywords from the historical search data in the corresponding scene according to the user identification.

The user search behavior log comprises user historical search operations and search results corresponding to the historical operations. The search keyword is a keyword that is the same as or similar to any search word in the search phrase entered by the user at the terminal. The server can acquire the corresponding user behavior search log according to the search phrase entered by the user and the user identification, and acquire the search keyword that is the same or similar to the search phrase in the search log.

Further, the input search performed by the user is taken as an example. The search phrase entered by the user is "How is the Education Distribution of Small Loan Borrowers in Shenzhen", and the corresponding historical search operations in the user search behavior log comprise "Shenzhen", "Small loan Borrowers", "Education Distribution", "Small Loan Borrowers in Shenzhen" and "Education Distribution of Small Loan Borrowers", etc. According to the user identification, the search keywords that can be acquired from the corresponding user search behavior log can be: "Small Loan Borrowers in Shenzhen", " Education Distribution of Small Loan Borrowers", and "Shenzhen".

S206: The server classifies the search keywords according to the user permission and the preset search keyword category.

Specifically, the server can acquire the user identification category corresponding to the user permission by acquiring the correspondence between the user permission and the user identification. The server can acquire the search keyword corresponding to the user identification category by acquiring the correspondence between the user identification category and the search keyword. The server can classify search keywords corresponding to different user identification categories into different search keyword categories by acquiring the association relationship between the search keyword category and the search keyword.

User permission represents the permission of the user at the corresponding terminal, including search, add, delete, and update. Different users can process the same user permission. For example, user A has the permission to search and update at the terminal, user B has the permission to search at the terminal, and user C has the permission to update at the terminal. The user identification category represents that different users with the same user permission process the category corresponding to the identification. That is to say, user A and user B process the search permission, but user B does not process the update permission, so user A and user B correspond to different user identification categories.

Further, the search keywords corresponding to different user identification categories can be classified into different search keyword categories according to the association relationship between the preset search keyword category and the search keyword category. For example, if the acquired search keyword entered by user A is "University Student Loan Amount Distribution in Shenzhen", and then the corresponding search keyword category can be acquired as "Loan" according to the search keyword entered by user A. According to the user identification category corresponding to user A, the acquired search keyword "University Student Loan Amount Distribution in Shenzhen" entered by user A is classified into the search keyword category corresponding to "Loan".

S208: the server acquires the association data corresponding to the search keyword category from the association recommendation set according to the correspondence between the preset search keyword category and the association recommendation set, and sends the association data to the terminal.

Specifically, the server extracts the candidate search keywords that meet the preset similarity from the database according to the search keyword corresponding to the search keyword category. A search association candidate word library is generated according to the candidate search keywords that meet the preset similarity, and the search results corresponding to the candidate search keywords are acquired. According to the association candidate word library and the search results corresponding to the candidate search keywords, the association recommendation set is generated; and the candidate search keywords that meet the preset similarity and the search results corresponding to the candidate search keywords are acquired from the association recommendation set. The association data is generated according to the candidate search keywords that meet the preset similarity and the search results corresponding to the candidate search keywords,

The server calculates the similarity between the search keyword and other search keywords in the database, and obtains the candidate search keywords that meet the preset similarity; the search association candidate word library is generated according to the candidate search keywords that meet the preset similarity. In this embodiment, the preset similarity can be set to 0.7, namely, other search keywords corresponding to the search keyword similarity of 0.7 can be selected as candidate search keywords; and the search association candidate word library can be generated according to the candidate search keywords greater than or equal to 0.7 of similarity.

The server can generate the association recommendation set according to the acquired search results corresponding to the candidate search keywords and the search association candidate word library generated according to the candidate search keywords. Further, the server acquires the association data corresponding to the search keyword category from the association recommendation set according to the correspondence between the preset search keyword category and the association recommendation set. The association data consists of the candidate search keywords that meet the preset similarity and the search results corresponding to the candidate search keywords.

In the above association recommendation method, the server acquires the user search behavior log from the database according to the search request sent by the terminal, the search request carries the user identification, and the user identification corresponds to the user permission. The corresponding search keywords are extracted from the search behavior log according to the user identification, and the search keywords corresponding to the user identification are classified into different search keyword categories according to the user permission. The association data corresponding to the search keyword category is acquired from the association recommendation set according to the correspondence between the preset search keyword category and the association recommendation set, and the association data is sent to the terminal. As a result, the user permission can be associated with the search keywords. The association data corresponding to the search keywords belonging to the same search keyword category can be sent to the user terminals with the same user permission, so the association recommendation of associated population is realized, and the association recommendation is further improved.

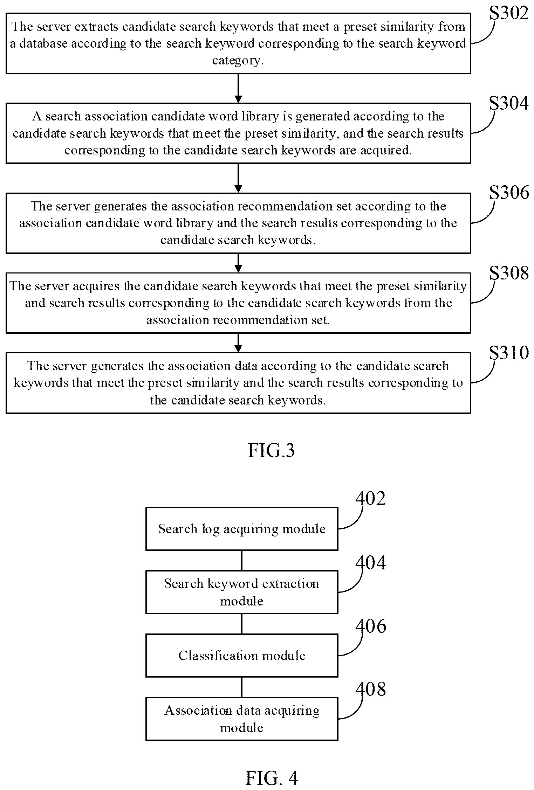

In one of the embodiments, as shown in Fig. 3, a step of acquiring the association data corresponding to the search keyword category is provided, namely, the step of acquiring the association data corresponding to the search keyword category from the association recommendation set according to the correspondence between the preset search keyword category and the association recommendation set comprises the following steps S302-S310:

S302: the server extracts the candidate search keywords that meet the preset similarity from the database according to the search keyword corresponding to the search keyword category.

Specifically, the server can acquire the search keyword corresponding to the search keyword category by acquiring the correspondence between the search keyword category and the search keyword. By calculating the similarity between the search keyword and other search keywords in the data, and acquiring other search keywords that meet the preset similarity, the search keywords are generated. In this embodiment, the preset similarity can be set to 0.7, namely, other search keywords corresponding to the search keyword with the similarity greater than or equal to 0.7 can be selected as the candidate search keywords.

Further, the acquired search keyword category as "Undergraduate Institution" is taken as an example. The server acquires the search keyword corresponding to the search keyword category of "Undergraduate Institution" which is "Distribution of Male Undergraduate Institution in Shanghai" by acquiring the correspondence between the search keyword category and the search keyword. The similarity between other search keywords in the database and the search keyword "Distribution of Male Undergraduate Institution in Shanghai" is calculated, wherein other search keywords comprise "Undergraduate Institution", "Distribution of Undergraduate Institution in Shanghai", "Distribution of Male Undergraduate Institution" etc. The server can acquire other search keywords with similarity greater than or equal to 0.7 and generate the candidate search keywords by separately calculating the similarity between other search keywords and search keywords.

S304: the search association candidate word library is generated according to the candidate search keywords that meet the preset similarity, and the search results corresponding to the candidate search keywords are acquired.

Specifically, the search association candidate word library is composed of a plurality of candidate search keywords that meet the preset similarity, and is used to provide corresponding candidate search keywords for different search keywords. The server acquires the correspondence between the candidate search keyword and the search result, and acquires the search result corresponding to the candidate search keyword according to the correspondence between the candidate search keyword and the search result.

Further, the acquired search keyword of "Distribution of Male Undergraduate Institution in Shanghai", and the candidate search keywords of "Distribution of Undergraduate Institution in Shanghai" and "Distribution of Male Undergraduate Institution "that meet the preset similarity are taken as the example. The server acquires the corresponding search results according to the candidate search keywords of "Distribution of Undergraduate Institution in Shanghai" and "Distribution of Male Undergraduate Institution".

S306: the server generates the association recommendation set according to the association candidate word library and the search results corresponding to the candidate search keywords.

Specifically, the association recommendation set consists of the association candidate word library and the search results corresponding to the candidate search keywords, and can be used to provide the association recommendation data corresponding to the search request to different users, wherein the association recommendation data is the candidate search keyword corresponding to the search keyword, and the search result corresponding to the candidate search keyword.

Further, take the acquired search keyword of "Distribution of Male Borrowers in Shanghai", the candidate search keywords of "Male Borrowers in Shanghai" and "Distribution of Education Background of Male Borrowers" that meet the preset similarity as the example. The corresponding association candidate word library is generated and the search results corresponding to the candidate search keywords are acquired according to the candidate search keywords of "Male Borrower in Shanghai" and" Education Distribution of Male Borrower". The association recommendation set corresponding to the search keyword of "Distribution of Education Background of Male Borrowers in Shanghai" is generated according to the association candidate word library and the search result corresponding to the candidate search keyword.

S308: the server acquires the candidate search keywords that meet the preset similarity and search results corresponding to the candidate search keywords from the association recommendation set.

Specifically, the server acquires the candidate search keywords that meet the preset similarity from the association recommendation set according to the search keywords and acquires the search result corresponding to the candidate search keywords from the database by acquiring the correspondence between the candidate search keywords and the search results.

Further, take the acquired search keyword of "University Student Loan Amount Distribution in Shenzhen" as an example. The candidate search keywords that meet the preset similarity and are acquired from the association recommendation set comprise: "University Student Loan in Shenzhen" and "Distribution of University Student Loan Amount", etc. The corresponding search results that are acquired from the database according to the candidate search keywords and meet the preset similarity comprise "University Student Loan Status in Shenzhen" and "Distribution of University Student Loan Amount in Various Regions". The corresponding search results can be compared and analyzed to obtain the data most in line with the search keywords.

S310: the server generates the association data according to the candidate search keywords that meet the preset similarity and the search results corresponding to the candidate search keywords,

Specifically, the association data consists of the candidate search keywords that meet the preset similarity and the search results corresponding to the candidate search keywords, and is used to send to the terminal where the corresponding user identification is located.

Further, the server parses the search request sent by the terminal and acquires the user identification carried in the search request, and acquires the corresponding search keyword from the search behavior log according to the user identification. Furthermore, the server can acquire the candidate search keywords that meet the preset similarity from the association recommendation set, wherein the candidate search keywords are obtained by calculating the similarity between other search keywords and the search keywords, and acquiring other keywords greater than or equal to the similarity. The server acquires the corresponding search results from the database according to the candidate search keywords that meet the preset similarity, and generates the association data according to the candidate search keywords that meet the preset similarity and the corresponding search results; and the association data is sent to the terminal where the corresponding to the user identification is located.

Through the above steps, the server generates the association recommendation set by acquiring the candidate search keywords that meet the preset similarity, the search results corresponding to the candidate search keywords, the association candidate word library and the search results corresponding to the candidate search keywords. When the search request sent by the terminal is received, the corresponding association data is acquired from the association recommendation set and sent to the corresponding terminal. As a result, the association data corresponding to different search requests can be sent to the terminal where the corresponding user identification is located; the targeted association recommendation of the search operation is realized, and the relevance of the recommendation is improved.

In one of the embodiments, a step of acquiring the user search behavior log from the database according to the search request is provided, comprising:

The server parses the search request and acquires the user identification carried in the search request; acquires the historical search operation corresponding to the user identification from the database; and generates the user search behavior log according to the historical search operation and the search result corresponding to the historical search operation.

Specifically, the search request carries the user identification, which is used to indicate that the corresponding user performs a search operation at the terminal and enters the corresponding search phrase. The server can acquire the corresponding user identification and the corresponding search phrase by parsing the search request. And then the corresponding historical search operation can be acquired from the database according to the user identification; the corresponding search result can be acquired from the database according to the historical search operation; and the user search behavior can be generated according to the historical search operation and the search result corresponding to the historical search operation.

Further, the server can acquire the user search behavior log from the database according to the search phrase entered by the user, wherein the search phrase can be a single word or a phrase or sentence composed of a plurality of words, and can be Chinese characters or pinyin. For example, the search phrase can be "Chinese character of Shenzhen", "English word of Shenzhen", and "Shanghai Population Education Distribution".

In the above steps, the server can generate the user search behavior log by acquiring the user identification carried in the search request and acquiring the historical search operation corresponding to the user identification according to the historical search operation and the search result corresponding to the historical search operation. Therefore, the user identification can be carried for different search requests, and the corresponding search behavior log can be generated; the problem of generating the user search behavior log by the historical search operation and search result corresponding to other user identifications is avoided; the error of the generating process of the search behavior log is reduced, and the accuracy of the search behavior log is ensured further.

In one of the embodiments, a step of extracting corresponding search keywords from the search behavior log according to user identification is provided, comprising:

The server acquires the scene corresponding to the user identification, and acquires the historical search input corresponding to the scene; acquires the search result corresponding to the historical search input from the search behavior log; generates the historical search data corresponding scene according to the historical search input under the scene and the corresponding search result; and extracts the search keywords from historical search data.

Specifically, the server acquires the corresponding scene according to the user identification, acquires the historical search input corresponding to the search phrase in the corresponding scene from the database according to the search phrase entered by the user, and acquires the search results corresponding to the historical search input from the search behavior log. The historical search data in the corresponding scene can be produced according to the historical search input corresponding to the search phrase entered by the user in the scene and the search result corresponding to the historical search input. The server extracts search keywords from the historical search data in the corresponding scene according to the user identification.

Wherein the user search behavior log comprises user historical search operations and search results corresponding to the historical operations. The search keyword is a keyword that is the same as or similar to any search word in the search phrase entered by the user at the terminal. The server can acquire the corresponding user behavior search log according to the search phrase entered by the user and the user identification, and acquire the search keyword that is the same or similar to the search phrase in the search log.

In the above steps, the server acquires the historical search input corresponding to the scene by acquiring the scene corresponding to the user identification, and acquires the search result corresponding to the historical search input from the search behavior log. Therefore, in the scene corresponding to the user identification, the historical search data corresponding to the scene can be acquired, and the corresponding search keyword can be acquired from the historical search data. Before acquiring the search keyword, the scene corresponding to the search request is determined; and the repeated acquisition operations under a plurality of scenes are reduced, and the resource consumption is further reduced.

In one of the embodiments, a step of classifying the search keywords according to the user permission and the preset search keyword category is provided, comprising:

The server acquires the user identification category corresponding to the user permission; acquires the correspondence between the user identification category and the search keyword, and acquires the search keyword corresponding to the user identification category; and classifies the search keywords corresponding to the different user identification categories into different search keyword categories according to the user identification categories.

Specifically, the server can acquire the user identification category corresponding to the user permission by acquiring the correspondence between the user permission and the user identification. The server can acquire the search keyword corresponding to the user identification category by acquiring the correspondence between the user identification category and the search keyword. The server can classify search keywords corresponding to different user identification categories into different search keyword categories by acquiring the association relationship between the search keyword category and the search keyword.

In the above steps, the server acquires the user identification category corresponding to the user permission, and acquires the search keyword corresponding to the user identification category, so that the search keywords corresponding to different user identification categories can be divided into different search keyword categories according to the user identification category. Furthermore, the search keywords corresponding to different user permissions can be classified; the association data corresponding to the search keywords with the same category can be recommended to the terminal corresponding to different user identification of the same user permission according to the user permission; and the relevance of the recommendation is further strengthened.

In one of the embodiments, an association recommendation method is provided, and the method further comprises:

The server excavates an input search behavior and/or a click search behavior entered by the user in the network; acquires an input search result corresponding to the input search behavior and a click search result corresponding to the click search behavior; the user search behavior log is generated according to the input search behavior and the corresponding input search result performed by the user, as well as the click search behavior and corresponding click search result.

Specifically, the user search behavior comprises the input search behavior and the click search behavior; the corresponding search result comprises the input search result and the click search result; and the server can generate the corresponding user search behavior log according to the user historical input search behavior and the corresponding historical input search result as well as the user historical click search input and the corresponding historical click search result.

Further, the user click search at the terminal is taken as an example, wherein the options available for clicking comprise: "Gender", "Age", "City", "Institution", "Education", "College", "Loan Status", "Monthly Income" and "Consumption Preference" etc. The server can acquire the corresponding historical click search result from the database according to the user identification corresponding to the user performing the click search and the clicked option; and the search behavior log corresponding to the user identification can be generated according to the click option for click search and the corresponding click search result.

For example, the options clicked by the user comprise "Gender", "City" and "Loan Status", wherein male is selected in the drop-down item of "Gender"; Shenzhen is selected in the drop-down item of "City"; and "Small Loan" is selected in the drop-down item of the "Loan Status". Through synthesizing the options clicked by the user, it can be known that the problem to be searched by the user is "Petty Loan Status of Male in Shenzhen". The server can acquire the corresponding historical search results from the database according to the user identification and the click search selection; and the search behavior log corresponding to the user is generated according to the historical click search option and the corresponding historical search result.

In the above association recommendation method, the server generates the search behavior log corresponding to the user by acquiring the user input search and corresponding input search result, as well as the click search and the corresponding click search result, so that the generation of personalized search behavior logs for the user can be achieved, which is beneficial to providing appropriate association recommendations to the corresponding users.

In one of the embodiments, an association recommendation method is provided, and the method further comprises:

The server presets the degree of association; acquires the candidate search keywords corresponding to the search keywords; sorts the similarity between the candidate search keywords and the search keywords, and acquires the top K candidate search keywords; the similarity corresponding to the top K candidate search keywords is compared with the preset degree of association to acquire the candidate search keywords that meet the preset degree of association; and the candidate search keywords that meet the preset degree of association and the corresponding search results are sent to the terminal.

Specifically, the degree of association is used to indicate the preset degree of association between the search keyword and the candidate search keyword. The server sorts the candidate search keywords and acquires the top K candidate search keywords by calculating the similarity between the candidate search keywords and the search keywords and according to the magnitude of the similarity, wherein K can be 10; the server sorts the candidate search keywords and acquires the top 10 candidate search keywords by calculating the similarity between the candidate search keywords and the search keywords and according to the magnitude of the similarity.

Further, the server compares the similarity corresponding to the top 10 candidate search keywords with a preset degree of association to acquire the candidate search keywords that meet the preset degree of association, wherein the degree of association can be set to 0.8, namely, the server compares the similarity corresponding to the top 10 candidate search keywords with the preset degree of association 0.8 to acquire the candidate search keywords corresponding the similarity greater than or equal to 0.8 and acquire the search results corresponding to the candidate search keywords with similarity greater than or equal to 0.8; the association data is generated according to the acquired candidate search keywords with the similarity greater than or equal to 0.8 and the corresponding search results; and the association data is sent to the terminal where the user identification is located.

In the above association recommendation method, the server acquires the top K candidate search keywords by sorting the similarity between the candidate search keywords and the search keywords, and the similarity corresponding to the top K candidate search keywords is compared with the preset degree of association; then the candidate search keywords that meet the preset degree of association can be acquired; and the candidate search keywords that meet the preset degree of association and the corresponding search results are sent to the terminal. Thus, the further screening of the candidate search keywords is realized; the degree of association between the candidate search keywords and the search keywords is ensured; and the relevance of recommendations is improved.

It shall be understood that, although the various steps in the flow chart of Fig.2 and Fig. 3 are displayed in sequence according to the arrows, these steps are not necessarily performed in sequence in the order indicated by the arrows. Unless specifically stated in this article, the execution of these steps is not strictly restricted in order; and these steps can be executed in other orders. Moreover, at least partial steps in Fig.2 and Fig. 3 can comprise a plurality of sub-steps or a plurality of stages. These sub-steps or stages are not necessarily executed at the same time, but can be executed at different moments. The execution order of these sub-steps or stages is not necessarily performed sequentially, but can be performed in turn or alternately with at least a part of other steps or sub-steps or stages of other steps.

In one of the embodiments, as shown in Fig. 4, an association recommendation device is provided, comprising:

A search log acquiring module 402, a search keyword extraction module 404, a classification module 406, and an association data acquiring module 408, wherein

The search log acquiring module 402 is configured to receive a search request sent by a terminal, and acquire a user search behavior log according to the search request, wherein the search request carries an user identification; and the user identification corresponds to an user permission.

The search keyword extraction module 404, which is configured to extract corresponding search keywords from the search behavior log according to the user identification.

The classification module 406 is configured to classify the search keywords according to the user permission and the preset search keyword category.

The association data acquiring module 408, which is configured to acquire the association data corresponding to the search keyword category from an association recommendation set according to the correspondence between the preset search keyword category and the association recommendation set, and send the association data to the terminal.

In the above association recommendation device, the server acquires the user search behavior log from the database according to the search request sent by the terminal, wherein the search request carries the user identification, and the user identification corresponds to the user permission. The corresponding search keywords are extracted from the search behavior log according to the user identification, and the search keywords corresponding to the user identification are classified into different search keyword categories according to the user permission. The association data corresponding to the search keyword category is acquired from the association recommendation set according to the correspondence between the preset search keyword category and the association recommendation set, and the association data is sent to the terminal. As a result, the user permission can be associated with the search keywords. The association data corresponding to the search keywords belonging to the same search keyword category can be sent to the user terminals with the same user permission, so the association recommendation of associated population is realized, and the association recommendation is further improved.

In one of the embodiments, a search log acquiring module is provided, which is also configured to:
Parse the search request and acquire the user identification carried in the search request; acquire the historical search operation corresponding to the user identification from the database; and generate the user search behavior log according to the historical search operation and the search result corresponding to the historical search operation.

According to the above search log acquiring module, the server can generate the user search behavior log by acquiring the user identification carried in the search request and acquiring the historical search operation corresponding to the user identification according to the historical search operation and the search result corresponding to the historical search operation. Therefore, the user identification can be carried for different search requests, and the corresponding search behavior log can be generated; the problem of generating the user search behavior log by the historical search operation and search result corresponding to other user identifications is avoided; the error of the generating process of the search behavior log is reduced, and the accuracy of the search behavior log is ensured further.

In one of the embodiments, a search keyword extraction module is provided, which is also configured to:
Acquire the scene corresponding to the user identification, and acquire the historical search input corresponding to the scene; acquire the search result corresponding to the historical search input from the search behavior log; generate the historical search data corresponding scene according to the historical search input under the scene and the corresponding search result; and extract the search keywords from historical search data.

According to the above search keyword extraction module, the server acquires the historical search input corresponding to the scene by acquiring the scene corresponding to the user identification, and acquires the search result corresponding to the historical search input from the search behavior log. Therefore, in the scene corresponding to the user identification, the historical search data corresponding to the scene can be acquired, and the corresponding search keyword can be acquired from the historical search data. Before acquiring the search keyword, the scene corresponding to the search request is determined; and the repeated acquisition operations under a plurality of scenes are reduced, and the resource consumption is further reduced.

In one of the embodiments, a classification module is provided, which is also configured to:
Acquire the user identification category corresponding to the user permission; acquire the correspondence between the user identification category and the search keyword, and acquire the search keyword corresponding to the user identification category; and classify the search keywords corresponding to the different user identification categories into different search keyword categories according to the user identification categories.

According to the above classification module, the server acquires the search keyword corresponding to the user identification category by acquiring the user identification category corresponding to the user permission, so that the search keywords corresponding to the different user identification categories can be divided into different search keyword categories according to the user identification categories. Furthermore, the search keywords corresponding to different user permissions can be classified; the association data corresponding to the search keywords with the same category can be recommended to the terminal corresponding to different user identification of the same user permission according to the user permission; and the relevance of the recommendation is further strengthened.

In one of the embodiments, an association data acquiring module is provided, which is also configured to:
Extract the candidate search keywords that meet the preset similarity from the database according to the search keyword corresponding to the search keyword category; generate a search association candidate word library according to the candidate search keywords that meet the preset similarity, and acquire the search result corresponding to the candidate search keywords; generate an association recommendation set according to the association candidate word library and the search results corresponding to the candidate search keywords; acquire the candidate search keywords that meet the preset similarity and the search results corresponding to the candidate search keywords from the association recommendation set; and generate the association data according to the candidate search keywords that meet the preset similarity and the search results corresponding to the candidate search keywords.

According to the above association data acquiring module, the server generates the association recommendation set by acquiring the candidate search keywords that meet the preset similarity, the search results corresponding to the candidate search keywords, the association candidate word library and the search results corresponding to the candidate search keywords. When the search request sent by the terminal is received, the corresponding association data is acquired from the association recommendation set and sent to the corresponding terminal. As a result, the association data corresponding to different search requests can be sent to the terminal where the corresponding user identification is located; the targeted association recommendation of the search operation is realized, and the relevance of the recommendation is improved.

In one of the embodiments, an association recommendation device is provided, and the device further comprises a search behavior log generating module, which is configured to:
Excavate an input search behavior and/or a click search behavior entered by the user in the network; acquire an input search result corresponding to the input search behavior and a click search result corresponding to the click search behavior; the user search behavior log is generated according to the input search behavior and the corresponding input search result performed by the user, as well as the click search behavior and corresponding click search result.

According to the above search behavior log generating module, the server generates the search behavior log corresponding to the user by acquiring the user input search and corresponding input search result, as well as the click search and the corresponding click search result, so that the generation of personalized search behavior logs for the user can be achieved, which is beneficial to providing appropriate association recommendations to the corresponding users.

In one of the embodiments, an association recommendation device is provided, and the device further comprises a sending module, which is configured to:
Preset the degree of association; acquire the candidate search keywords corresponding to the search keywords; sort the similarity between the candidate search keywords and the search keywords, and acquire the top K candidate search keywords; compare the similarity corresponding to the top K candidate search keywords with the preset degree of association to acquire the candidate search keywords that meet the preset degree of association; and send the candidate search keywords that meet the preset degree of association and the corresponding search results to the terminal.

According to the above sending module, the server acquires the top K candidate search keywords by sorting the similarity between the candidate search keywords and the search keywords, and the similarity corresponding to the top K candidate search keywords is compared with the preset degree of association; then the candidate search keywords that meet the preset degree of association can be acquired; and the candidate search keywords that meet the preset degree of association and the corresponding search results are sent to the terminal. Thus, the further screening of the candidate search keywords is realized; the degree of association between the candidate search keywords and the search keywords is ensured; and the relevance of recommendations is improved.

For the specific limitation of the association recommendation device, please refer to the above limitation on the association recommendation method; and it will not be repeated here. Each module in the above association recommendation device can be implemented in whole or in part by software, hardware, and a combination thereof. The above modules can be embedded or independent of a processor in the computer equipment in the form of hardware, or can be stored in a memory of the computer equipment in the form of software, so that the processor can call and execute the operations corresponding to the above modules.

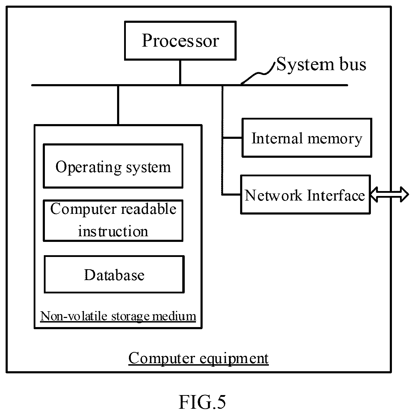

In one embodiment, computer equipment is provided; the computer equipment can be a server, and its internal structural diagram may be as shown in Fig. 5. The computer equipment comprises a processor, a memory, a network interface and a database which are connected through a system bus, wherein the processor of the computer equipment is used to provide calculation and control capabilities. The memory of the computer equipment comprises a non-volatile computer readable storage medium and an internal memory. The non-volatile computer readable storage medium stores an operating system, computer readable instructions and a database. The internal memory provides an environment for the operation of the operating system and computer readable instructions in the non-volatile computer readable storage medium. The database of the computer equipment is used to store the association data. The network interface of the computer equipment is used to communicate with an external terminal through network connection. The computer readable instructions implement an association recommendation method when executed by the processor.

Those skilled in the art can understand that the structure shown in Fig. 5 is only a block diagram of partial structure related to the solution of the present application, and does not constitute a limitation on the computer equipment to which the solution of the present application is applied. The specific computer equipment may comprise more or fewer parts than those shown in the figure, or combining some parts, or processing different part arrangements.

A computer equipment comprises a memory and one or a plurality of processors; computer readable instructions are stored in the memory; when the computer readable instructions are executed by the processor, steps of a pre-treatment method for unbalanced sample data provided in any embodiment of the present application is implemented.

One or a plurality non-volatile computer readable storage media storing the computer readable instructions are provided. When the computer readable instructions are executed by one or the plurality of processors, one or the plurality of processors implement the steps of the pre-treatment method for the unbalanced sample data provided in any embodiment of the present application.

Those ordinary skilled in the art can understand that all or part of the processes in the methods of the above embodiments can be implemented by the computer readable instructions. The computer readable instructions can be stored in the non-volatile computer readable storage medium. When executed, the computer readable instructions may comprise the procedures of the embodiments of the above methods, wherein any reference to the memory, storage, database or other mediums used in the embodiments provided in this application may comprise the non-volatile and/or volatile memory. The non-volatile memory may comprise read only memory (ROM), programmable ROM (PROM), electrically programmable ROM (EPROM), electrically erasable programmable ROM (EEPROM) or flash memory. The volatile memory may comprise a random access memory (RAM) or an external cache memory. As an illustration rather than a limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), synchronous link (Synchlink) DRAM (SLDRAM), memory bus (Rambus) direct RAM (RDRAM), direct memory bus dynamic RAM (DRDRAM), and memory bus dynamic RAM (RDRAM), etc.

The technical features of the above embodiments can be combined arbitrarily. In order to make the description simple, all possible combinations of the technical features in the above embodiments are not described. However, as long as there is no contradiction in the combination of these technical features, it shall be considered as the scope described in this specification.

The above embodiments only express a few implementation modes of the present application; the description is relatively specific and detailed, but it shall not be understood as a limitation on the scope of the invention patent. It shall be pointed out that for those skilled in the art can make a plurality of modifications and improvements without departing from the concept of this application; and these belong to the protection scope of this application. Therefore, the scope of protection of the applied patent shall be subject to appended claims.

## Claims

1. An association recommendation method, comprising:
receiving a search request sent by a terminal, and acquiring a search behavior log of the user according to the search request, wherein the search request carries a user identification, and the user identification corresponds to a user permission;
extracting corresponding search keywords from the search behavior log according to the user identification;
classifying the search keywords according to the user permission and a preset search keyword category; and
acquiring association data corresponding to the search keyword category from an association recommendation set according to the correspondence between the preset search keyword category and the association recommendation set, and sending the association data to the terminal.

2. The method according to claim 1, wherein the acquiring the user search behavior log from the database according to the search request comprises:
parsing the search request and acquiring the user identification carried in the search request;
acquiring the historical search operation corresponding to the user identification from the database; and
generating the user search behavior log according to the historical search operation and the search result corresponding to the historical search operation.

3. The method according to claim 1, wherein the extracting corresponding search keywords from the search behavior log according to user identification comprises:
acquiring the scene corresponding to the user identification, and acquiring the historical search input corresponding to the scene;
generating the historical search data corresponding scene according to the historical search input under the scene and the corresponding search result; and
extracting the search keywords from historical search data.

4. The method according to any one of claims 1-3, wherein the classifying the search keywords according to the user permission and the preset search keyword category comprises:
acquiring the user identification category corresponding to the user permission;
acquiring the correspondence between the user identification category and the search keyword, and acquiring the search keyword corresponding to the user identification category; and
classifying the search keywords corresponding to the different user identification categories into different search keyword categories according to the user identification categories.

5. The method according to any one of claims 1-3, wherein the acquiring the association data corresponding to the search keyword category from the association recommendation set according to the correspondence between the preset search keyword category and the association recommendation set comprises:
extracting the candidate search keywords that meet the preset similarity from the database according to the search keyword corresponding to the search keyword category;
generating a search association candidate word library according to the candidate search keywords that meet the preset similarity, and acquiring the search result corresponding to the candidate search keywords;
generating an association recommendation set according to the association candidate word library and the search results corresponding to the candidate search keywords;
acquiring the candidate search keywords that meet the preset similarity and the search results corresponding to the candidate search keywords from the association recommendation set; and
generating the association data according to the candidate search keywords that meet the preset similarity and the search results corresponding to the candidate search keywords.

6. The method according to any one of claims 1-3, further comprising:
excavating an input search behavior and/or a click search behavior entered by the user in the network;
acquiring an input search result corresponding to the input search behavior and a click search result corresponding to the click search behavior; and
generating the user search behavior log according to the input search behavior and the corresponding input search result performed by the user, as well as the click search behavior and corresponding click search result.

7. The method according to any one of claims 1-3, further comprising:
presetting the degree of association;
acquiring the candidate search keywords corresponding to the search keywords;
sorting the similarity between the candidate search keywords and the search keywords, and acquiring the top K candidate search keywords;
comparing the similarity corresponding to the top K candidate search keywords with the preset degree of association to acquire the candidate search keywords that meet the preset degree of association; and
sending the candidate search keywords that meet the preset degree of association and the corresponding search results to the terminal.

8. An association recommendation device, comprising:
a search log acquiring module, which is used to receive the search request sent by the terminal and acquire the search behavior log of the user according to the search request, wherein the search request carries the user identification, and the user identification corresponds to the user permission;
a search keyword extraction module, which is used to extract the corresponding search keywords from the search behavior log according to the user identification;
a classification module, which is used to classify the search keywords according to the user permission and the preset search keyword category; and
an association data acquiring module, which is used to acquire the association data corresponding to the search keyword category from the association recommendation set according to the correspondence between the preset search keyword category and the association recommendation set, and send the association data to the terminal.

9. The device according to claim 8, wherein the search log acquiring module is also used to:
parse the search request and acquire the user identification carried in the search request;
acquire the historical search operation corresponding to the user identification from the database; and
generate the user search behavior log according to the historical search operation and the search result corresponding to the historical search operation.

10. A computer equipment, comprising a memory and one or a plurality of processors, wherein computer readable instructions are stored in the memory, and when the computer readable instructions are executed by the processor, the one or the plurality of processors execute the following steps:
receiving a search request sent by a terminal, and acquiring a search behavior log of the user according to the search request, wherein the search request carries a user identification, and the user identification corresponds to a user permission;
extracting corresponding search keywords from the search behavior log according to the user identification;
classifying the search keywords according to the user permission and a preset search keyword category; and
acquiring association data corresponding to the search keyword category from an association recommendation set according to the correspondence between the preset search keyword category and the association recommendation set, and sending the association data to the terminal.

11. The computer equipment according to claim 10, wherein when executing the computer readable instructions, the processors also execute the following steps:
parsing the search request and acquiring the user identification carried in the search request;
acquiring the historical search operation corresponding to the user identification from the database; and
generating the user search behavior log according to the historical search operation and the search result corresponding to the historical search operation.

12. The computer equipment according to claim 10, wherein when executing the computer readable instructions, the processors also execute the following steps:
acquiring the scene corresponding to the user identification, and acquiring the historical search input corresponding to the scene;
generating the historical search data corresponding scene according to the historical search input under the scene and the corresponding search result; and
extracting the search keywords from historical search data.

13. The computer equipment according to any one of claims 10-12, wherein when executing the computer readable instructions, the processors also execute the following steps:
acquiring the user identification category corresponding to the user permission;
acquiring the correspondence between the user identification category and the search keyword, and acquiring the search keyword corresponding to the user identification category; and
classifying the search keywords corresponding to the different user identification categories into different search keyword categories according to the user identification categories.

14. The computer equipment according to any one of claims 10-12, wherein when executing the computer readable instructions, the processors also execute the following steps:
extracting the candidate search keywords that meet the preset similarity from the database according to the search keyword corresponding to the search keyword category;
generating a search association candidate word library according to the candidate search keywords that meet the preset similarity, and acquiring the search result corresponding to the candidate search keywords;
generating an association recommendation set according to the association candidate word library and the search results corresponding to the candidate search keywords;
acquiring the candidate search keywords that meet the preset similarity and the search results corresponding to the candidate search keywords from the association recommendation set; and
generating the association data according to the candidate search keywords that meet the preset similarity and the search results corresponding to the candidate search keywords.

15. The computer equipment according to any one of claims 10-12, wherein when executing the computer readable instructions, the processors also execute the following steps:
excavating an input search behavior and/or a click search behavior entered by the user in the network;
acquiring an input search result corresponding to the input search behavior and a click search result corresponding to the click search behavior; and
generating the user search behavior log according to the input search behavior and the corresponding input search result performed by the user, as well as the click search behavior and corresponding click search result.

16. One or a plurality of non-volatile computer readable storage media for storing the computer readable instructions, wherein when the computer readable instructions are executed by one or a plurality of processors, the one or the plurality of processors perform the following steps:
receiving a search request sent by a terminal, and acquiring a search behavior log of the user according to the search request, wherein the search request carries a user identification, and the user identification corresponds to a user permission;
extracting corresponding search keywords from the search behavior log according to the user identification;
classifying the search keywords according to the user permission and a preset search keyword category; and
acquiring association data corresponding to the search keyword category from an association recommendation set according to the correspondence between the preset search keyword category and the association recommendation set, and sending the association data to the terminal.

17. The storage media according to claim 16, wherein when executing the computer readable instructions, the processors also execute the following steps:
parsing the search request and acquiring the user identification carried in the search request;
acquiring the historical search operation corresponding to the user identification from the database; and
generating the user search behavior log according to the historical search operation and the search result corresponding to the historical search operation.

18. The storage media according to claim 16, wherein when executing the computer readable instructions, the processors also execute the following steps:
acquiring the scene corresponding to the user identification, and acquiring the historical search input corresponding to the scene;
generating the historical search data corresponding scene according to the historical search input under the scene and the corresponding search result; and
extracting the search keywords from historical search data.

19. The storage media according to any one of claims 16-18, wherein when executing the computer readable instructions, the processors also execute the following steps:
acquiring the user identification category corresponding to the user permission;
acquiring the correspondence between the user identification category and the search keyword, and acquiring the search keyword corresponding to the user identification category; and
classifying the search keywords corresponding to the different user identification categories into different search keyword categories according to the user identification categories.

20. The storage media according to any one of claims 16-18, wherein when executing the computer readable instructions, the processors also execute the following steps:
extracting the candidate search keywords that meet the preset similarity from the database according to the search keyword corresponding to the search keyword category;
generating a search association candidate word library according to the candidate search keywords that meet the preset similarity, and acquiring the search result corresponding to the candidate search keywords;
generating an association recommendation set according to the association candidate word library and the search results corresponding to the candidate search keywords;
acquiring the candidate search keywords that meet the preset similarity and the search results corresponding to the candidate search keywords from the association recommendation set; and
generating the association data according to the candidate search keywords that meet the preset similarity and the search results corresponding to the candidate search keywords.
